# EUROPÄISCHE PATENTSCHRIFT

(11) **EP 4 021 753 B1**
(45) Veröffentlichungstag und Bekanntmachung des Hinweises auf die Patenterteilung: **08.07.2026**
(21) Anmeldenummer: 19769995.2
(22) Anmeldetag: 28.08.2019
(51) Int. Cl.: B60L 5/36, B60L 5/42, B60L 53/16, B60L 53/31, B60L 53/30, B60L 53/36

(54) **POSITIONIEREINHEIT UND VERFAHREN ZUR KONTAKTIERUNG**
POSITIONING UNIT AND METHOD FOR CONTACTING
UNITÉ DE POSITIONNEMENT ET MÉTHODE POUR CONTACTER

(43) Veröffentlichungstag der Anmeldung: 06.07.2022
(73) Patentinhaber: Schunk Transit Systems GmbH, 35435 Wettenberg (DE); Schunk Transit Systems GmbH, 5151 Nussdorf am Haunsberg (AT)
(72) Erfinder: FELDINGER, Martin, 5201 Seekirchen am Wallersee (AT); HEIEIS, Nils, 35423 Lich (DE); STAUBACH, Timo, 36358 Herbstein (DE)
(74) Vertreter: advotec.
(86) Internationale Anmeldenummer: PCT/EP2019/072936
(87) Internationale Veröffentlichungsnummer: WO 2021/037351

(56) Entgegenhaltungen:
- EP-A1- 2 857 252
- EP-A1- 2 857 252
- CN-A- 106 004 457
- CN-A- 106 004 457
- DE-A1- 102012 223 068
- DE-A1- 102014 215 573
- DE-A1- 102015 217 380
- DE-A1- 102015 217 380
- DE-A1- 102016 212 987
- DE-A1- 2 165 813
- DE-A1- 2 165 813
- DE-A1- 2 522 876
- DE-A1- 2 522 876
- DE-A1- 2 909 855
- DE-A1- 3 033 449
- DE-A1- 3 033 449
- GB-A- 1 506 855
- US-A1- 2011 106 349
- US-A1- 2017 113 554
- US-A1- 2017 113 554

## Beschreibung

Die Erfindung betrifft eine Positioniereinheit für elektrisch angetriebene Fahrzeuge, insbesondere Elektrobusse oder dergleichen, und ein Verfahren zur Ausbildung einer elektrisch leitenden Verbindung zwischen einem elektrisch angetriebenen Fahrzeug und einer stationären Ladestation, wobei die Positioniereinheit an einem Fahrzeugdach anordbar ausgebildet ist, wobei eine Kontaktvorrichtung der Positioniereinheit relativ zu einer Ladekontaktvorrichtung der Ladestation bewegbar und mit dieser in einer Kontaktposition elektrisch kontaktierbar ist, wobei die Positioniereinheit eine Gelenkarmvorrichtung zur Positionierung der Kontaktvorrichtung und eine Antriebvorrichtung zum Antrieb der Gelenkarmvorrichtung aufweist, wobei die Gelenkarmvorrichtung eine erste Schwenkeinrichtung mit einem ersten Schwenkarm aufweist, wobei die Gelenkarmvorrichtung eine zweite Schwenkeinrichtung mit einem zweiten Schwenkarm aufweist, mittels der die Kontaktvorrichtung von einer Einfahrposition der Positioniereinheit in die Kontaktposition schwenkbar ist und umgekehrt, wobei der erste Schwenkarm an einem distalen Ende des zweiten Schwenkarms schwenkbar angeordnet ist, wobei die Kontaktvorrichtung unabhängig von einer Lage des zweiten Schwenkarms verschwenkbar ist, wobei mittels der ersten Schwenkeinrichtung die Kontaktvorrichtung von einer Verwahrlage der Einfahrposition zur Verwahrung der Kontaktvorrichtung in eine vertikale Kontaktlage der Einfahrposition schwenkbar ist und umgekehrt.

Derartige Positioniereinheiten und Verfahren sind aus dem Stand der Technik bekannt und werden regelmäßig bei elektrisch angetriebenen Fahrzeugen eingesetzt, die beispielsweise zwischen Haltestellen verkehren. Diese können Elektrobusse aber auch prinzipiell andere Fahrzeuge, wie beispielsweise ein Zug oder eine Straßenbahn, sein, die nicht permanent mit einem Fahrdraht oder ähnlichem verbunden sind. Bei diesen Fahrzeugen erfolgt eine Aufladung eines elektrischen Energiespeichers bei Fahrtunterbrechung an einer Haltestelle durch eine Ladestation. Das Fahrzeug wird an der Haltestelle mit der Ladestation elektrisch verbunden, wobei der Energiespeicher zumindest so weit aufgeladen wird, dass das Fahrzeug die nächste anzufahrende Haltestelle mit einer Ladestation erreichen kann. Auch ist es möglich das Fahrzeug außerhalb der Betriebszeiten auf diese Weise mit elektrischer Energie zu versorgen.

Zur Herstellung einer elektrischen Verbindung zwischen Fahrzeug und Ladestation wird eine Positioniereinheit eingesetzt, die auf einem Fahrzeugdach montiert sein kann und eine Kontaktvorrichtung des Fahrzeugs mit einer Ladekontaktvorrichtung der Ladestation oberhalb des Fahrzeugs verbindet. Kontaktflächen der Kontaktvorrichtung werden dann in Richtung von Ladekontaktflächen oberhalb des Dachs des Fahrzeugs bewegt und eine elektrische Verbindung hergestellt.

Wesentlich bei einer Zusammenführung von Kontaktvorrichtung und Ladekontaktvorrichtung ist, dass die Kontaktvorrichtung vergleichsweise präzise an der Ladekontaktvorrichtung positioniert werden kann und mit einer ausreichenden Kontaktkraft an die Ladekontaktflächen gedrückt wird, um eine sichere elektrische Verbindung ausbilden zu können. Eine vergleichbare Positioniereinheit ist beispielsweise aus der WO2015/018887 bekannt. Nachteilig bei den bekannten Positioniereinheiten ist, dass diese die Ladekontaktvorrichtung nur in einer definierten Höhe kontaktieren können. Während eines Anhebens der Kontaktvorrichtung mit einer Gelenkarmvorrichtung wird die Kontaktvorrichtung in eine vertikale Lage gebracht, die sie jedoch erst in der vorgesehenen Kontaktposition bzw. Höhe erreicht. Ladekontaktvorrichtungen an Haltestellen müssen daher stets eine im Wesentlichen einheitliche Höhe über einer Fahrbahn aufweisen bzw. die jeweilige Positioniereinheit auf einem Fahrzeug muss auf eine Höhe des Fahrzeugs bzw. die Höhe der Ladekontaktvorrichtungen abgestimmt sein. Eine flexible Anordnung von Ladekontaktvorrichtungen entlang einer Fahrstrecke, beispielsweise unterhalb Brücken und an Masten ist damit nicht mehr ohne Weiteres möglich, da dann hier eine Höhe der Ladekontaktvorrichtung über einer Fahrbahn durch das betreffende Bauwerk vorgegeben ist.

Weiter ist es nachteilig, dass eine Bauhöhe der Positioniereinheit ein Unterfahren von Bauwerken unmöglich machen kann, was einen Einsatzbereich eines Fahrzeugs mit einer Positioniereinheit einschränkt. Darüber hinaus ist es wünschenswert eine Positioniereinheit für Nutzer des betreffenden Fahrzeugs möglichst wenig sichtbar erscheinen zu lassen. Es ist daher auch bekannt, auf einem Fahrzeugdach Verkleidungsteile anzubringen, um Positioniereinheiten zu verbergen bzw. so in einem Fahrzeug zu integrieren, dass eine Formgebung des Fahrzeugs noch ansprechend auf die Nutzer wirkt.

Die EP 2 857 252 A1 offenbart eine Positioniereinheit für einen elektrisch angetriebenen Truck zur Ausbildung einer elektrisch leitenden Verbindung zwischen dem Truck und einem Fahrdraht, wobei die Positioniereinheit an einem Dach des Trucks anordbar ausgebildet ist, wobei die Positioniereinheit eine Gelenkarmvorrichtung und eine Antriebvorrichtung zum Antrieb der Gelenkarmvorrichtung aufweist, welche durch einen hydraulischen Zylinder ausgebildet ist, wobei die Gelenkarmvorrichtung eine erste Schwenkeinrichtung mit einem ersten Schwenkarm und eine zweite Schwenkeinrichtung mit einem zweiten Schwenkarm aufweist. Der erste Schwenkarm kann ausschließlich in Abhängigkeit von dem zweiten Schwenkarm geschwenkt werden. So muss zum Schwenken des ersten Schwenkarms zunächst der zweite Schwenkarm durch den hydraulischen Zylinder angehoben werden, wobei eine Federeinrichtung zunehmend gespannt wird. Erst wenn ein durch die zunehmend gespannte Federeinrichtung bedingtes auf den ersten Schwenkarm einwirkendes Drehmoment ein bedingt durch eine Gravitationskraft des ersten Schwenkarms auf den ersten Schwenkarm einwirkendes Drehmoment übersteigt, kann der erste Schwenkarm von einer ersten Position in eine zweite Position geschwenkt werden.

Die DE 21 65 813 A1 offenbart einen zweistufigen Scherenstromabnehmer für Hochgeschwindigkeitszüge, welche eine Gelenkarmvorrichtung mit einer ersten Schwenkeinrichtung mit einem ersten Schwenkarm und eine zweite Schwenkeinrichtung mit einem zweiten Schwenkarm umfasst. Zu einer Inbetriebsetzung des Scherenstromabnehmers wird zunächst der erste Schwenkarm mittels eines Hydraulikmotors in eine Höchststellung gebracht. Danach wird der zweite Schwenkarm mittels eines Druckzylinders gehoben.

Ein weiterer derartiger zweistufiger Scherenstromabnehmer für Hochgeschwindigkeitszüge geht aus der DE 30 33 449 A1 hervor, welcher ebenfalls eine Gelenkarmvorrichtung mit einer ersten Schwenkeinrichtung mit einem ersten Schwenkarm und eine zweite Schwenkeinrichtung mit einem zweiten Schwenkarm umfasst.

Es ist daher Aufgabe der Erfindung, eine Positioniereinheit und ein Verfahren zur Ausbildung einer elektrisch leitenden Verbindung zwischen einem elektrisch angetriebenen Fahrzeug und einer stationären Ladestation vorzuschlagen, die bzw. das eine flexible Nutzung des Fahrzeugs ermöglicht.

Diese Aufgabe wird durch eine Positioniereinheit mit den Merkmalen des Anspruchs 1, ein Schnelladesystem mit den Merkmalen des Anspruchs 12 und ein Verfahren mit den Merkmalen des Anspruchs 13 gelöst.

Die erfindungsgemäße Positioniereinheit für elektrisch angetriebene Fahrzeuge, insbesondere Elektrobusse oder dergleichen, dient zur Ausbildung einer elektrisch leitenden Verbindung zwischen einem Fahrzeug und einer stationären Ladestation, wobei die Positioniereinheit an einem Fahrzeugdach anortbar ausgebildet ist, wobei eine Kontaktvorrichtung der Positioniereinheit relativ zu einer Ladekontaktvorrichtung der Ladestation bewegbar und mit dieser in einer Kontaktposition elektrisch kontaktierbar ist, wobei die Positioniereinheit eine Gelenkarmvorrichtung zur Positionierung der Kontaktvorrichtung und eine Antriebvorrichtung zum Antrieb der Gelenkarmvorrichtung aufweist, wobei die Gelenkarmvorrichtung eine erste Schwenkeinrichtung mit einem ersten Schwenkarm aufweist, mittels der die Kontaktvorrichtung von einer Verwahrlage einer Einfahrposition der Positioniereinheit zur Verwahrung der Kontaktvorrichtung in eine vertikale Kontaktlage der Einfahrposition schwenkbar ist und umgekehrt, wobei die Gelenkarmvorrichtung eine zweite Schwenkeinrichtung mit einem zweiten Schwenkarm aufweist, mittels der die Kontaktvorrichtung von der Einfahrposition in die Kontaktposition schwenkbar ist und umgekehrt, wobei der erste Schwenkarm an einem distalen Ende des zweiten Schwenkarms schwenkbar angeordnet ist, wobei die Kontaktvorrichtung unabhängig von einer Lage des zweiten Schwenkarms verschwenkbar ist, wobei der zweite Schwenkarm gekröpft ausgebildet ist, wobei ein das distale Ende ausbildender Abschnitt des zweiten Schwenkarms in der Verwahrlage horizontal positioniert ist, wobei der erste Schwenkarm mit der Kontaktvorrichtung in der Verwahrlage in Richtung eines proximalen Endes des zweiten Schwenkarms geschwenkt ist und an dem Abschnitt anliegt, wobei die Kontaktvorrichtung zunächst von der Verwahrlage in die vertikale Kontaktlage und nachfolgend von der vertikalen Kontaktlage in die Kontaktposition schwenkbar ist und umgekehrt.

Eine Bewegung der Kontaktvorrichtung relativ zu einer oberhalb der Kontaktvorrichtung angeordneten Ladekontaktvorrichtung einer Ladestation wird demnach von der Gelenkarmvorrichtung mit der Antriebvorrichtung ausgeführt. Die Kontaktvorrichtung kann dabei über eine Anzahl an Kontakten verfügen, die mit Ladekontakten der Ladekontaktvorrichtung kontaktiert werden. Wesentlich ist, dass sich die Kontaktvorrichtung in der Kontaktposition in einer vertikalen Lage befindet, damit diese Kontaktierung überhaupt erfolgen kann. Die Kontaktvorrichtung ist an dem distalen Ende des zweiten Schwenkarms schwenkbar angeordnet und kann so in die vertikale Kontaktlage und in die Verwahrlage verschwenkt werden. Die Kontaktvorrichtung befindet sich dann auch in der Kontaktposition in der vertikalen Kontaktlage. Insbesondere dadurch dass der erste Schwenkarm mit der Kontaktvorrichtung an dem distalen Ende des zweiten Schwenkarms schwenkbar angeordnet ist, wird es möglich, die Kontaktvorrichtung unabhängig von der Lage des zweiten Schwenkarms zu verschwenken bzw. in die vertikale Kontaktlage zu bringen. Dies ermöglicht die Positionierung der Kontaktvorrichtung in der vertikalen Kontaktlage in verschiedenen Höhen, beispielsweise mit dem zweiten Schwenkarm in einer abgesenkten Position bzw. Verwahrlage oder mit dem zweiten Schwenkarm in einer maximal ausgefahrenen Position. Hieraus ergibt sich ein vergleichsweise großer Bereich innerhalb dem die Kontaktvorrichtung in eine Kontaktposition gebracht werden kann. Es ist dann auch nicht mehr zwingend erforderlich, verschiedene Ladekontaktvorrichtungen entlang eines Fahrwegs im Wesentlichen auf übereinstimmenden Höhen oberhalb einer Fahrbahn anzubringen und auf einen Fahrzeugtyp anzupassen. Die erfindungsgemäße Positioniereinheit kann aufgrund des vergleichsweise großen Bereichs, in dem die Kontaktvorrichtung oberhalb des Fahrzeugdachs in der Kontaktposition positioniert werden kann, an unterschiedlichsten Fahrzeugtypen mit variierenden Montagehöhen von Ladekontaktvorrichtungen flexibel eingesetzt werden.

Die Positioniereinheit kann einen Halterahmen zur Befestigung der Positioniereinheit auf einem Dach eines Fahrzeugs umfassen, wobei der zweite Schwenkarm an dem Halterahmen schwenkbar angeordnet sein kann. Der Halterahmen kann beispielsweise Festlager für den zweiten Schwenkarm und die Antriebvorrichtung ausbilden bzw. aufweisen. Der Halterahmen kann auch besonders einfach an einem Dach eines Fahrzeugs befestigt werden. Eine Befestigung kann beispielsweise über Dämpferelemente erfolgen, die Vibrationen und/oder Fahrzeugbewegungen dämpfen.

Mittels der Gelenkarmvorrichtung kann die Kontaktvorrichtung relativ zur Ladekontaktvorrichtung in vertikaler und horizontaler Richtung positionierbar und in die Kontaktposition bringbar sein. Insbesondere wenn der erste Schwenkarm relativ zu dem zweiten Schwenkarm, und der zweite Schwenkarm relativ zu einem Fahrzeugdach verschwenkt wird, wird die Kontaktvorrichtung in zumindest einem Radius bzw. einer Kreisbahn um ein Drehlager des jeweiligen Schwenkarms bewegt, was eine horizontale Verschiebung der Kontaktvorrichtung bei gleichzeitig einer vertikalen Verschiebung bewirkt. Insofern ist es dann auch vorteilhaft, wenn die Ladekontaktvorrichtung so ausgebildet ist, dass sie an verschiedenen Stellen in horizontaler Richtung von der Kontaktvorrichtung kontaktiert werden kann. Beispielsweise kann die Positioniereinheit so auf einem Fahrzeugdach montiert sein, dass die Bewegung in der horizontalen Richtung entlang einer Fahrtrichtung des Fahrzeugs verläuft.

Die Antriebvorrichtung kann einen ersten Verstellantrieb zur Ausbildung einer auf den ersten Schwenkarm wirkenden Verstellkraft und eine mit dem ersten Verstellantrieb mechanisch zusammenwirkende erste Federeinrichtung aufweisen. Der erste Verstellantrieb kann so mit der ersten Federeinrichtung zusammenwirken, dass allein die Verstellkraft eine Bewegung des ersten Schwenkarms mit der Kontaktvorrichtung bewirken kann. Dabei kann der erste Verstellantrieb unmittelbar mit der ersten Federeinrichtung zusammenwirken oder unter Zwischenschaltung eines weiteren mechanischen Bauelements, wie beispielsweise einem Hebel, mit dem Schwenkarm verbunden sein.

Die erste Federeinrichtung kann zumindest eine Drehfeder umfassen, die an einer den ersten Schwenkarm und den zweiten Schwenkarm verbindenden Schwenkachse angeordnet sein kann. Über die Drehfeder kann eine Verstellkraft derart auf den ersten Schwenkarm bewirkt werden, dass dieser durch die Drehfeder in der Verwahrlage oder alternativ in eine Kontaktlage bewegt wird. Beispielsweise kann vorgesehen sein, dass die Drehfeder bei einem Ausfall des ersten Verstellantriebs die Kontaktvorrichtung in die Verwahrlage bewegt, um eine gegebenenfalls fehlerhafte Kontaktierung zu verhindern. Prinzipiell kann anstelle einer Drehfeder auch jede andere Art von Feder verwendet werden, wie beispielsweise ein Federstab. Eine Drehfeder ist besonders platzsparend an der Schwenkachse um diese herum anbringbar.

Der erste Verstellantrieb kann einen Elektromotor, einen Seiltrieb und/oder Kettentrieb aufweisen, wobei über diesen der erste Schwenkarm an der Schwenkachse drehbar sein kann. Beispielsweise kann direkt an der Schwenkachse ein Elektromotor angeordnet oder auch innerhalb dieser integriert sein. Weiter kann über einen Seiltrieb und/oder einen Kettentrieb, welcher an der Schwenkachse befestigt ist, eine Zugkraft auf den ersten Schwenkarm ausgeübt werden. So können beispielsweise zwei Seilzüge an der Schwenkachse angeordnet sein, die durch eine gegenläufige Bewegung den Schwenkarm verschwenken können. Eine Betätigung des Seiltriebs bzw. Kettentriebs kann auch mittels eines Elektromotors, der dann entfernt von den Schwenkarmen an einem Halterahmen der Positioniereinheit angeordnet sein kann, erfolgen. Weiter ist es auch möglich, einen Seiltrieb und einen Kettentrieb kombiniert zu verwenden. Der Kettentrieb kann aus einen Kette ausgebildet sein, die über ein Zahnrad an der Schwenkachse verläuft und an ihren jeweiligen Enden mit einem Seilzug bzw. Bowdenzug verbunden ist.

Die Antriebvorrichtung kann einen zweiten Verstellantrieb zur Ausbildung einer auf den zweiten Schwenkarm wirkenden Verstellkraft und eine mit dem Verstellantrieb mechanisch zusammenwirkende zweite Federeinrichtung aufweisen. Der zweite Verstellantrieb kann unmittelbar mit der zweiten Federeinrichtung oder unter Zwischenschaltung eines weiteren mechanischen Bauelements, wie beispielsweise einem Hebel, verbunden sein. Der zweite Verstellantrieb kann einen Elektromotor bzw. einen Linearantrieb, vorzugsweise einen Spindeltrieb aufweisen. Der zweite Verstellantrieb kann einen Wegsensor aufweisen, der ein Inkrementalwertgeber oder Absolutwertgeber sein kann. Es ist dann möglich, immer eine genaue Arbeitsposition des zweiten Verstellantriebs zu bestimmen. Die Verstellantriebe können auch positionsabhängig betätigbare Endlageschalter und/oder kraftabhängig betätigbare Druckschalter aufweisen. Weiter können auch ergänzend Druckschalter zur Begrenzung einer Kontaktkraft bzw. Verstellkraft genutzt werden.

Die zweite Federeinrichtung kann zumindest eine Kontaktfeder umfassen, wobei der zweite Verstellantrieb und die Kontaktfeder in einer mechanischen Reihenschaltung miteinander gekoppelt sein können, derart, dass von dem zweiten Verstellantrieb und der Kontaktfeder eine Kontaktkraft auf eine Kontaktfläche ausbildbar ist. Durch eine mechanische Reihenschaltung von dem zweiten Verstellantrieb und der Kontaktfeder wird es möglich, die Gelenkarmvorrichtung bzw. den zweiten Schwenkarm durch die Verstellkraft des zweiten Verstellantriebs zu bewegen und bei einer Kontaktierung der Kontaktfläche mit einem Ladekontakt der Ladekontaktvorrichtung die Verstellkraft weiter zu erhöhen. Die weiter erhöhte Verstellkraft kann dann von der mit dem zweiten Verstellantrieb verbundenen Kontaktfeder gespeichert und als Kontaktkraft auf die Kontaktfläche übertragen werden. Die Erhöhung der Verstellkraft wird dann nicht zu einer weitergehenden Bewegung der Gelenkarmvorrichtung, sondern zu einer Ausbildung bzw. Erhöhung der Kontaktkraft auf die Ladekontaktflächen genutzt. Somit wird es möglich, unabhängig von einer Höhe der Ladekontaktflächen bzw. der Ladekontaktvorrichtung über einer Fahrbahn bzw. von einem Relativabstand von Ladekontaktflächen und Kontaktvorrichtung in einer Kontaktposition der Kontaktvorrichtung eine im Wesentlichen stets gleich hohe Kontaktkraft auf die Ladekontaktflächen auszubilden. Eine Änderung der Höhe, beispielsweise durch eine Beladung des Fahrzeugs, bewirkt dann keine wesentliche Änderung der Kontaktkraft, so dass eine besonders sichere Kontaktierung gewährleistet ist.

Erfindungsgemäß ist der zweite Schwenkarm gekröpft ausgebildet, wobei ein das distale Ende ausbildender Abschnitt des zweiten Schwenkarms in der Verwahrlage horizontal positioniert ist. Der zweite Schwenkarm kann dann in der Verwahrlage besonders platzsparend auf einem Fahrzeugdach abgelegt werden.

Erfindungsgemäß ist der erste Schwenkarm mit der Kontaktvorrichtung in der Verwahrlage in Richtung eines proximalen Endes des zweiten Schwenkarms geschwenkt und liegt an diesem auf. Da der zweite Schwenkarm gekröpft ausgebildet ist, liegt der erste Schwenkarm mit der Kontaktvorrichtung in dem Abschnitt des zweiten Schwenkarms, welcher horizontal positioniert ist, an diesem an. Eine Bauhöhe der Gelenkarmvorrichtung in der Verwahrlage kann so vergleichsweise niedrig ausgebildet werden. Insofern ist es vorteilhaft die Gelenkarmvorrichtung in der Verwahrlage möglichst kompakt auf dem Dach des Fahrzeugs anzuordnen.

Die Kontaktvorrichtung kann mit der Gelenkarmvorrichtung zwischen einer unteren Kontaktposition und einer oberen Kontaktposition positionierbar sein, wobei ein Verhältnis von Bauhöhe der Positioniereinheit in der Verwahrlage und Höhe der oberen Kontaktposition 1:4, bevorzugt 1:6,5 betragen kann, wobei ein Verhältnis der Bauhöhe und Höhe der unteren Kontaktposition 1:4, bevorzugt 1:3, betragen kann. Zwischen der oberen Kontaktposition und der unteren Kontaktposition ist demnach ein großer Bereich existent, innerhalb dem mit der Kontaktvorrichtung eine Ladekontaktvorrichtung kontaktiert werden kann. Gleichzeitig ist die Bauhöhe im Verhältnis zu diesem Bereich vergleichsweise klein. Ein Fahrzeug mit der Positioniereinheit kann dann auch eine vergleichsweise größere Anzahl Bauwerke, beispielsweise Brücken, unterfahren, wodurch das Fahrzeug flexibler einsetzbar wird.

Die Kontaktvorrichtung kann einen Kontaktelementträger mit Kontaktelementen aufweisen, wobei die Kontaktelemente in der Kontaktposition dann mit Ladekontaktelementen der Ladekontaktvorrichtung jeweils zur Ausbildung von Kontaktpaarungen elektrisch kontaktierbar sind. Der Kontaktelementträger kann so ausgebildet sein, dass die Kontaktelemente in der vertikalen Kontaktlage der Kontaktvorrichtung an einer Oberseite des Kontaktelementträgers angeordnet sind. Die Ladekontaktelemente können beispielsweise als Leiterstreifen ausgebildet sein, die an einem dachförmigen Ladekontaktelementträger der Ladekontaktvorrichtung angeordnet sind.

Die erste Schwenkeinrichtung kann eine Querführung aufweisen, mittels der die Kontaktvorrichtung quer relativ zur Ladekontaktvorrichtung positionierbar ist, wobei die Querführung an einem distalen Ende des ersten Schwenkarms angeordnet sein kann. So kann dann die Kontaktvorrichtung an dem distalen Ende des ersten Schwenkarms quer zur Fahrtrichtung des Fahrzeugs verschoben werden. Durch diese Verschiebbarkeit kann beispielsweise eine fehlerhafte Positionierung des Fahrzeugs an einer Haltestelle quer zur Fahrtrichtung ausgeglichen werden. Darüber hinaus können eventuelle Fahrzeugbewegungen in Folge eines einseitigen Absinkens des Fahrzeugs zum Ein- und Aussteigen von Personen so ausgeglichen werden, dass es zu keiner Verschiebung der Kontaktvorrichtung relativ zur Ladekontaktvorrichtung in Querrichtung kommen kann. Auch werden dann keine Querkräfte auf den ersten Schwenkarm und den zweiten Schwenkarm ausgeübt. Die Querführung kann als eine geradförmige Linearführung oder auch als eine bogenförmige Linearführung ausgebildet sein. Die Kontaktvorrichtung kann frei verschieblich an der Querführung angeordnet sein, wobei die Querführung so ausgestaltet sein kann, dass diese als eine Führungsschiene oder mit Führungsprofilen für die Kontaktvorrichtung ausgebildet ist. Weiter kann vorgesehen sein, die Kontaktvorrichtung auf der Querführung zu zentrieren, d.h. beispielsweise mittels Federn in einer Ruhelage bzw. nicht kontaktierter Lage mittig relativ zur Querführung auszurichten.

Das erfindungsgemäße Schnellladesystem umfasst eine Ladekontaktvorrichtung und einer erfindungsgemäße Positioniereinheit. Weitere vorteilhafte Ausführungsformen des Schnellladesystems ergeben sich aus den Merkmalsbeschreibungen der auf den Anspruch 1 zurückbezogenen Unteransprüche.

Bei dem erfindungsgemäßen Verfahren zur Ausbildung einer elektrisch leitenden Verbindung zwischen einem elektrisch angetriebenen Fahrzeug, insbesondere Elektrobus oder dergleichen, und einer stationären Ladestation mit einer Positioniereinheit, wird eine Kontaktvorrichtung der Positioniereinheit relativ zu einer Ladekontaktvorrichtung der Ladestation bewegt und mit dieser in einer Kontaktposition elektrisch kontaktiert, wobei eine Positionierung der Kontaktvorrichtung mittels einer Gelenkarmvorrichtung der Positioniereinheit und ein Antrieb der Gelenkarmvorrichtung mittels einer Antriebvorrichtung der Positioniereinheit erfolgt, wobei mittels einer ersten Schwenkeinrichtung der Gelenkarmvorrichtung mit einem ersten Schwenkarm die Kontaktvorrichtung von einer Verwahrlage einer Einfahrposition der Positioniereinheit zur Verwahrung der Kontaktvorrichtung in einer vertikale Kontaktlage der Einfahrposition geschwenkt wird, wobei mittels einer zweiten Schwenkeinrichtung der Gelenkarmvorrichtung mit einem zweiten Schwenkarm die Kontaktvorrichtung von der Einfahrposition in die Kontaktposition geschwenkt wird, wobei der erste Schwenkarm an einem distalen Ende des zweiten Schwenkarms angeordnet ist und geschwenkt wird, wobei die Kontaktvorrichtung unabhängig von einer Lage des zweiten Schwenkarms verschwenkt wird, wobei der zweite Schwenkarm gekröpft ausgebildet ist, wobei ein das distale Ende ausbildender Abschnitt des zweiten Schwenkarms in der Verwahrlage horizontal positioniert wird, wobei der erste Schwenkarm mit der Kontaktvorrichtung in der Verwahrlage in Richtung eines proximalen Endes des zweiten Schwenkarms geschwenkt wird und an dem Abschnitt anliegt, wobei die Kontaktvorrichtung zunächst von der Verwahrlage in die vertikale Kontaktlage und nachfolgend von der vertikalen Kontaktlage in die Kontaktposition geschwenkt wird und umgekehrt. Zu den Vorteilen des erfindungsgemäßen Verfahrens wird auf die Vorteilsbeschreibung der erfindungsgemäßen Positioniereinheit verwiesen.

Erfindungsgemäß wird die Kontaktvorrichtung zunächst von der Verwahrlage in die vertikale Kontaktlage und nachfolgend von der vertikalen Kontaktlage in die Kontaktposition geschwenkt und umgekehrt. In der Verwahrlage kann die Positioniereinheit dann eine minimale Bauhöhe aufweisen. Beim Anfahren einer Haltestelle mit einem Fahrzeug kann dann die Kontaktvorrichtung in einem ersten Schritt von der Verwahrlage in die vertikale Kontaktlage geschwenkt werden.

Weiter kann während eines Schwenkens der Kontaktvorrichtung mit dem zweiten Schwenkarm die erste Schwenkeinrichtung die Kontaktvorrichtung stets in der vertikalen Kontaktlage positionieren. Nach dem Verschwenken der Kontaktvorrichtung in die vertikale Kontaktlage kann in einem zweiten Schritt durch das Verschwenken des ersten Schwenkarms mit der Kontaktvorrichtung mit dem zweiten Schwenkarm die Kontaktvorrichtung in der vertikalen Kontaktlage angehoben und gegen eine Ladekontaktvorrichtung bewegt werden. Dabei ist es vorteilhaft, wenn während des Verschwenkens des zweiten Schwenkarms der erste Schwenkarm bzw. die Kontaktvorrichtung immer vertikal positioniert ist bzw. der erste Schwenkarm relativ zum zweiten Schwenkarm verschwenkt wird. Diese gleichzeitige Bewegung des ersten Schwenkarms und des zweitem Schwenkarms kann durch eine geeignete Mechanik oder Steuerung der Antriebvorrichtung bewirkt werden. In jedem Fall wird es dadurch möglich, die Kontaktvorrichtung in einem Bereich zwischen einer oberen Kontaktposition und einer unteren Kontaktposition lagerrichtig mit einer Ladekontaktvorrichtung zu kontaktieren.

Weitere vorteilhafte Ausführungsformen des Verfahrens ergeben sich aus den Merkmalsbeschreibungen der auf den Anspruch 1 zurückbezogenen Unteransprüchen.

Nachfolgend wird eine bevorzugte Ausführungsform der Erfindung unter Bezugnahme auf die beigefügten Zeichnungen näher erläutert.

### Es zeigen:

- **Fig. 1**: eine Positioniereinheit in einer perspektivischen Ansicht;
- **Fig. 2**: die Positioniereinheit in eine Vorderansicht;
- **Fig. 3**: die Positioniereinheit in einer Seitenansicht in einer Verwahrlage einer Einfahrposition;
- **Fig. 4**: die Positioniereinheit in einer Seitenansicht in einer vertikalen Kontaktlage der Einfahrposition;
- **Fig. 5**: die Positioniereinheit in einer Seitenansicht in einer vertikalen Kontaktlage einer Kontaktposition;
- **Fig. 6**: die Positioniereinheit in einer Seitenansicht mit einer Darstellung verschiedener Positionen.

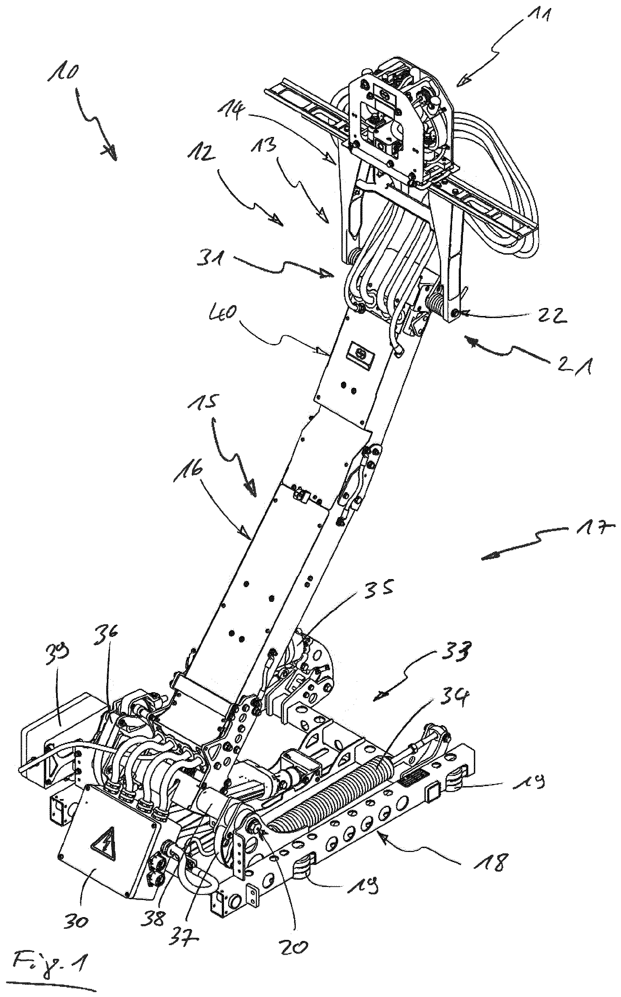

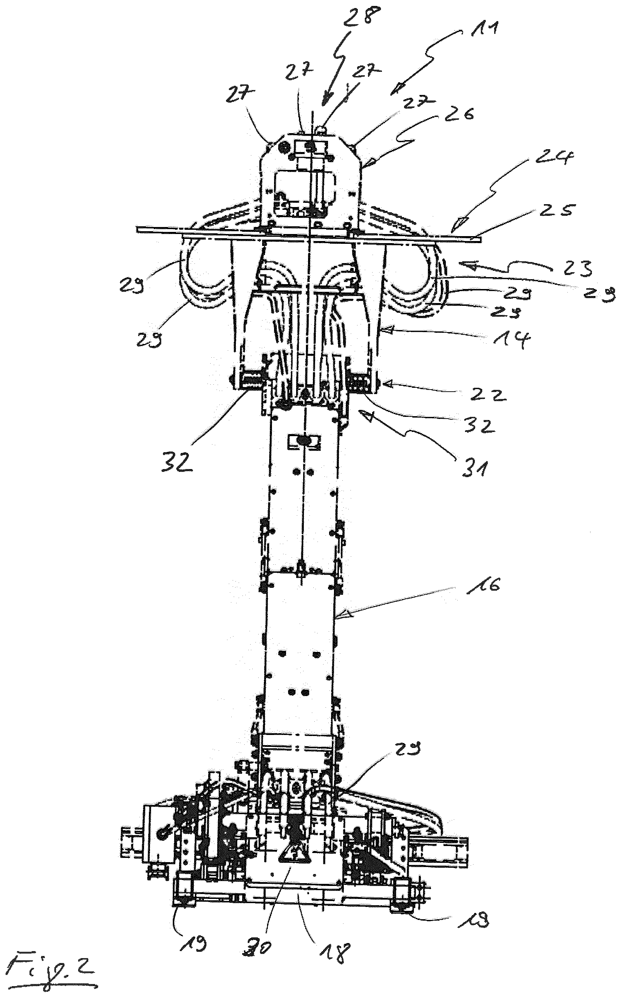

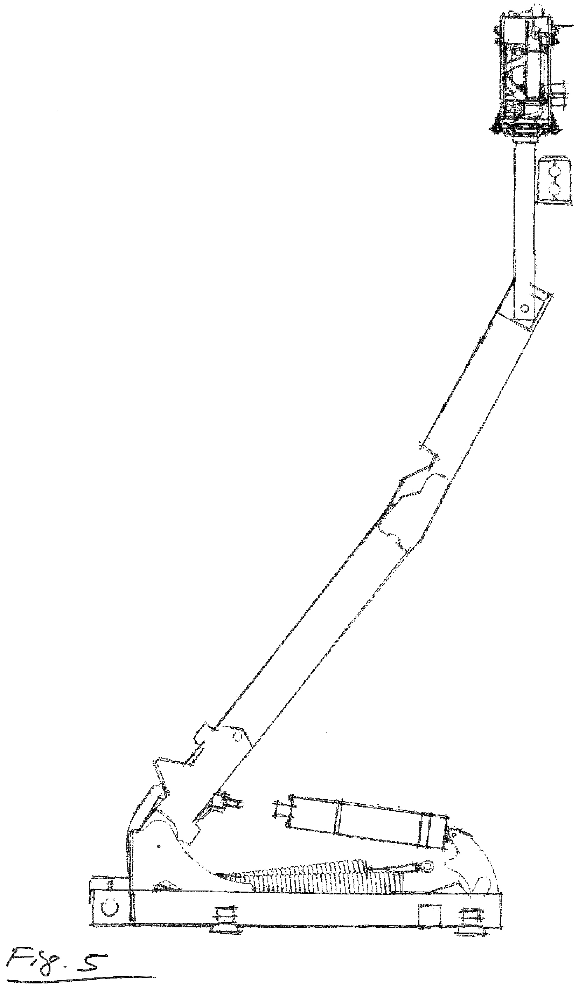

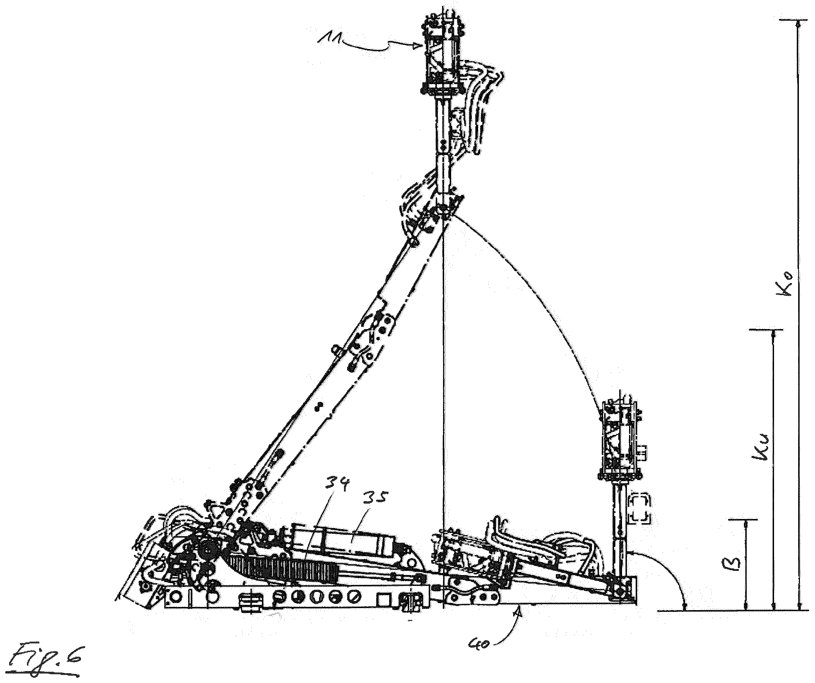

Eine Zusammenschau der **Fig. 1 bis 6** zeigt eine Positioniereinheit 10, welche auf einem Dach eines hier nicht dargestellten Fahrzeugs, insbesondere Elektrobus, montiert ist. Die Positioniereinheit 10 umfasst eine Kontaktvorrichtung 11 zur Herstellung eines elektrischen Kontakts mit einer hier nicht dargestellten Ladekontaktvorrichtung einer Ladestation. Die Ladekontaktvorrichtung ist oberhalb des Fahrzeugdachs und der Kontaktvorrichtung 11 mittels einer nicht näher dargestellten Aufhängevorrichtung im Bereich einer Haltestelle des Fahrzeugs aufgehängt. Die Positioniereinheit 10 umfasst weiter eine Gelenkarmvorrichtung 12, die aus einer ersten Schwenkeinrichtung 13 mit einem ersten Schwenkarm 14 und einer zweiten Schwenkeinrichtung 15 mit einem zweiten Schwenkarm 16 ausgebildet ist, sowie eine Antriebvorrichtung 17 zum Antrieb der Gelenkarmvorrichtung 12.

Die Positioniereinheit 10 ist weiter mit einem Halterahmen 18 zur Befestigung der Positioniereinheit 10 auf dem Fahrzeugdach über Dämpferelemente 19 ausgebildet. An dem Halterahmen 18 ist ein Drehlager 20 ausgebildet an dem der zweite Schwenkarm 16 schwenkbar befestigt ist. An einem distalen Ende 21 des zweiten Schwenkarms 16 ist eine Schwenkachse 22 ausgebildet, um die der erste Schwenkarm 14 schwenkbar ist. An einem distalen Ende 23 des ersten Schwenkarms 14 ist die Kontaktvorrichtung 11 angeordnet. Die Kontaktvorrichtung 11 ist weiter quer relativ zu der nicht dargestellten Ladekontaktvorrichtung an einer Querführung 24 der ersten Schwenkeinrichtung 13 bewegbar. Die Querführung 24 ist aus einer Schiene 25 ausgebildet, die an dem distalen Ende 23 befestigt ist.

Die Kontaktvorrichtung 11 ist aus einem Kontaktelementträger 26 mit daran federnd gelagerten Kontaktelementen 27 ausgebildet. Die Kontaktelemente 27 befinden sich an einer Oberseite 28 des Kontaktelementträgers 26. Die Kontaktelemente 27 sind über flexible Kabel 29 mit einem Anschlusskasten 30 an dem Halterahmen 18 verbunden.

Die Antriebvorrichtung 17 umfasst einen ersten Verstellantrieb 31 zur Ausbildung einer auf dem ersten Schwenkarm 14 wirkenden Verstellkraft, wobei der erste Verstellantrieb 31 Drehfedern 32 umfasst, die auf der Schwenkachse 22 angeordnet sind. Weiter umfasst der erste Verstellantrieb 31 einen hier nicht näher dargestellten Seil- und Kettentrieb, der aus einer Kette und zwei Seilzügen ausgebildet ist. Die Kette greift in ein hier nicht dargestelltes Zahnrad an der Schwenkachse 22 ein und ist über die Seilzüge so betätigbar, dass der erste Schwenkarm 14 verschwenkt werden kann.

Die Antriebvorrichtung 17 weist weiter einen zweiten Verstellantrieb 33 zur Ausbildung einer auf den zweiten Schwenkarm 16 wirkenden Verstellkraft auf. Der zweite Verstellantrieb 33 umfasst eine Feder 34 und einen Linearantrieb 35 über den die Verstellkraft zusammen mit der Feder 34 auf den zweiten Schwenkarm 16 bewirkt werden kann. Die Feder 34 und der Linearantrieb 35 greifen über Hebel 36 bzw. 37 an einer Schwenkachse 38, welche im Drehlager 20 gelagert ist, an. Eine Betätigung des ersten Verstellantriebs 31 und des zweiten Verstellantriebs 33 erfolgt mit einer hier am Halterahmen 18 angeordneten Steuerung 39.

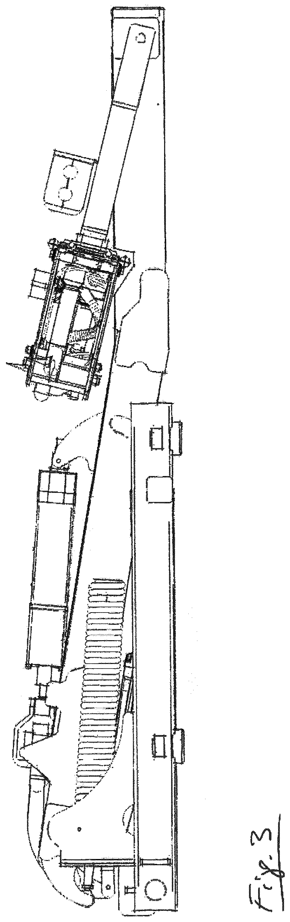

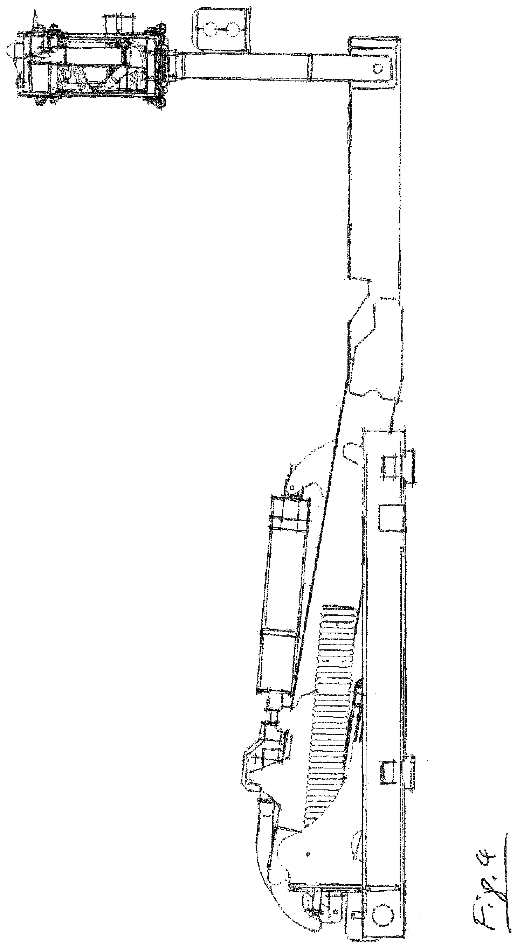

Eine Kontaktierung einer Ladekontaktvorrichtung mit der Kontaktvorrichtung 11 erfolgt ausgehend von der in der **Fig. 3** dargestellten Verwahrlage einer Einfahrposition der Gelenkarmvorrichtung 12. In einem ersten Schritt wird der erste Schwenkarm 14 in eine vertikale Kontaktlage der Einfahrposition gebracht, die in **Fig. 4** dargestellt ist. In einem zweiten Schritt wird der zweite Schwenkarm 16 angehoben, wobei der erste Schwenkarm 14 stets vertikal ausgerichtet bleibt bzw. sich in der vertikalen Kontaktlage befindet. Die Kontaktvorrichtung 11 kann so zwischen einer oberen Kontaktposition Ko und einer unteren Kontaktposition Ku bzw. einem Kontaktbereich positioniert werden in dem in jedem Fall ein elektrischer Kontakt mit einer Ladekontaktvorrichtung ausgebildet werden kann. Gleichfalls ist es möglich, dass die Positioniereinheit 10 in der Verwahrlage eine vergleichsweise niedrige Bauhöhe B ausbildet. Der zweite Schwenkarm 16 ist zur Reduzierung der Bauhöhe B gekröpft ausgebildet, so dass ein Abschnitt 40 des zweiten Schwenkarms 16 in der Verwahrlage horizontal positioniert ist und der erste Schwenkarm 14 mit der Kontaktvorrichtung 11 an dem Abschnitt 40 platzsparend anliegen kann.

## Patentansprüche

1. Positioniereinheit (10) für elektrisch angetriebene Fahrzeuge, insbesondere Elektrobusse oder dergleichen, zur Ausbildung einer elektrisch leitenden Verbindung zwischen einem Fahrzeug und einer stationären Ladestation, wobei die Positioniereinheit (10) an einem Fahrzeugdach anordbar ausgebildet ist, wobei eine Kontaktvorrichtung (11) der Positioniereinheit (10) relativ zu einer Ladekontaktvorrichtung der Ladestation bewegbar und mit dieser in einer Kontaktposition elektrisch kontaktierbar ist, wobei die Positioniereinheit (10) eine Gelenkarmvorrichtung (12) zur Positionierung der Kontaktvorrichtung (11) und eine Antriebvorrichtung (17) zum Antrieb der Gelenkarmvorrichtung (12) aufweist, wobei die Gelenkarmvorrichtung (12) eine erste Schwenkeinrichtung (13) mit einem ersten Schwenkarm (14) aufweist, wobei die Gelenkarmvorrichtung (12) eine zweite Schwenkeinrichtung (15) mit einem zweiten Schwenkarm (16) aufweist, mittels der die Kontaktvorrichtung (11) von einer Einfahrposition der Positioniereinheit (10) in die Kontaktposition schwenkbar ist und umgekehrt, wobei der erste Schwenkarm (14) an einem distalen Ende (21) des zweiten Schwenkarms (16) schwenkbar angeordnet ist, wobei die Kontaktvorrichtung (11) unabhängig von einer Lage des zweiten Schwenkarms (16) verschwenkbar ist, wobei mittels der ersten Schwenkeinrichtung (13) die Kontaktvorrichtung (11) von einer Verwahrlage der Einfahrposition zur Verwahrung der Kontaktvorrichtung (11) in eine vertikale Kontaktlage der Einfahrposition schwenkbar ist und umgekehrt,
**dadurch gekennzeichnet,**
**dass** der zweite Schwenkarm (16) gekröpft ausgebildet ist, wobei ein das distale Ende (21) ausbildender Abschnitt (40) des zweiten Schwenkarms (16) in der Verwahrlage horizontal positioniert ist, wobei der erste Schwenkarm (14) mit der Kontaktvorrichtung (11) in der Verwahrlage in Richtung eines proximalen Endes des zweiten Schwenkarms (16) geschwenkt ist und an dem Abschnitt (40) anliegt, wobei die Kontaktvorrichtung (11) zunächst von der Verwahrlage in die vertikale Kontaktlage und nachfolgend von der vertikalen Kontaktlage in die Kontaktposition schwenkbar ist und umgekehrt.

2. Positioniereinheit nach Anspruch 1,
**dadurch gekennzeichnet,**
**dass** die Positioniereinheit (10) einen Halterahmen (18) zur Befestigung der Positioniereinheit (10) auf einem Dach eines Fahrzeugs umfasst, wobei der zweite Schwenkarm (16) an dem Halterahmen (18) schwenkbar angeordnet ist.

3. Positioniereinheit nach Anspruch 1 oder 2,
**dadurch gekennzeichnet,**
**dass** mittels der Gelenkarmvorrichtung (12) die Kontaktvorrichtung (11) relativ zur Ladekontaktvorrichtung in vertikaler und horizontaler Richtung positionierbar und in die Kontaktposition bringbar ist.

4. Positioniereinheit nach einem der vorangehenden Ansprüche,
**dadurch gekennzeichnet,**
**dass** die Antriebvorrichtung (17) einen ersten Verstellantrieb (31) zur Ausbildung einer auf den ersten Schwenkarm (14) wirkenden Verstellkraft und eine mit dem ersten Verstellantrieb mechanisch zusammenwirkende erste Federeinrichtung aufweist.

5. Positioniereinheit nach Anspruch 4,
**dadurch gekennzeichnet,**
**dass** die erste Federeinrichtung zumindest eine Drehfeder (32) umfasst, die an einer den ersten Schwenkarm (14) und den zweiten Schwenkarm (16) verbindenden Schwenkachse (22) angeordnet ist.

6. Positioniereinheit nach Anspruch 4,
**dadurch gekennzeichnet,**
**dass** der erste Verstellantrieb (31) einen Elektromotor, einen Seiltrieb und/oder Kettentrieb aufweist, über den der erste Schwenkarm (11) an der Schwenkachse (22) drehbar ist.

7. Positioniereinheit nach einem der vorangehenden Ansprüche,
**dadurch gekennzeichnet,**
**dass** die Antriebvorrichtung (17) einen zweiten Verstellantrieb (33) zur Ausbildung einer auf den zweiten Schwenkarm (16) wirkenden Verstellkraft und eine mit dem zweiten Verstellantrieb (33) mechanisch zusammenwirkende zweite Federeinrichtung aufweist.

8. Positioniereinheit nach Anspruch 7,
**dadurch gekennzeichnet,**
**dass** die zweite Federeinrichtung zumindest eine Kontaktfeder umfasst, wobei der zweite Verstellantrieb (33) und die Kontaktfeder in einer mechanischen Reihenschaltung miteinander gekoppelt sind, derart, dass von dem zweiten Verstellantrieb und der Kontaktfeder eine Kontaktkraft auf eine Kontaktfläche ausbildbar ist.

9. Positioniereinheit nach einem der vorangehenden Ansprüche,
**dadurch gekennzeichnet,**
**dass** die Kontaktvorrichtung (11) mit der Gelenkarmvorrichtung (12) zwischen einer unteren Kontaktposition und einer oberen Kontaktposition positionierbar ist, wobei ein Verhältnis von Bauhöhe (B) der Positioniereinheit (11) in der Verwahrlage und Höhe (Ko) der oberen Kontaktposition 1:4, bevorzugt 1:6,5 beträgt, wobei ein Verhältnis der Bauhöhe (B) und Höhe (Ku) der unteren Kontaktposition 1:4, bevorzugt 1:3 beträgt.

10. Positioniereinheit nach einem der vorangehenden Ansprüche,
**dadurch gekennzeichnet,**
**dass** die Kontaktvorrichtung (11) einen Kontaktelementträger (26) mit Kontaktelementen (27) aufweist, wobei die Kontaktelemente (27) in der Kontaktposition mit Ladekontaktelementen der Ladekontaktvorrichtung jeweils zur Ausbildung von Kontaktpaarungen elektrisch kontaktierbar sind.

11. Positioniereinheit nach einem der vorangehenden Ansprüche,
**dadurch gekennzeichnet,**
**dass** die erste Schwenkeinrichtung (13) eine Querführung (24) aufweist, mittels der die Kontaktvorrichtung (11) quer relativ zur Ladekontaktvorrichtung positionierbar ist, wobei die Querführung (24) an einem distalen Ende (23) des ersten Schwenkarms (14) angeordnet ist.

12. Schnellladesystem mit einer Ladekontaktvorrichtung und einer Positioniereinheit (10) nach einem der Ansprüche 1 bis 11.

13. Verfahren zur Ausbildung einer elektrisch leitenden Verbindung zwischen einem elektrisch angetriebenen Fahrzeug, insbesondere Elektrobus oder dergleichen, und einer stationären Ladestation mit einer Positioniereinheit (10), wobei eine Kontaktvorrichtung (11) der Positioniereinheit (10) relativ zu einer Ladekontaktvorrichtung der Ladestation bewegt und mit dieser in einer Kontaktposition elektrisch kontaktiert wird, wobei eine Positionierung der Kontaktvorrichtung (11) mittels einer Gelenkarmvorrichtung (12) der Positioniereinheit (10) und ein Antrieb der Gelenkarmvorrichtung (12) mittels einer Antriebvorrichtung (17) der Positioniereinheit (10) erfolgt, wobei mittels einer zweiten Schwenkeinrichtung (15) der Gelenkarmvorrichtung (12) mit einem zweiten Schwenkarm (16) die Kontaktvorrichtung (11) von einer Einfahrposition der Positioniereinheit (10) in die Kontaktposition geschwenkt wird, wobei ein erster Schwenkarm (14) einer ersten Schwenkeinrichtung (13) der Gelenkarmvorrichtung (12) an einem distalen Ende (21) des zweiten Schwenkarms (16) angeordnet ist und geschwenkt wird, wobei die Kontaktvorrichtung (11) unabhängig von einer Lage des zweiten Schwenkarms (16) verschwenkt wird, wobei mittels der ersten Schwenkeinrichtung (13) die Kontaktvorrichtung (11) von einer Verwahrlage der Einfahrposition zur Verwahrung der Kontaktvorrichtung (11) in eine vertikale Kontaktlage der Einfahrposition geschwenkt wird,
**dadurch gekennzeichnet,**
**dass** der zweite Schwenkarm (16) gekröpft ausgebildet ist, wobei ein das distale Ende (21) ausbildender Abschnitt (40) des zweiten Schwenkarms (16) in der Verwahrlage horizontal positioniert wird, wobei der erste Schwenkarm (14) mit der Kontaktvorrichtung (11) in der Verwahrlage in Richtung eines proximalen Endes des zweiten Schwenkarms (16) geschwenkt wird und an dem Abschnitt (40) anliegt, wobei die Kontaktvorrichtung (11) zunächst von der Verwahrlage in die vertikale Kontaktlage und nachfolgend von der vertikalen Kontaktlage in die Kontaktposition geschwenkt wird und umgekehrt.

14. Verfahren nach Anspruch 13,
**dadurch gekennzeichnet,**
**dass** während eines Schwenkens der Kontaktvorrichtung (11) mit dem zweiten Schwenkarm (16) die erste Schwenkeinrichtung (13) die Kontaktvorrichtung (11) stets in der vertikalen Kontaktlage positioniert.

## Claims

1. A positioning unit (10) for electrically driven vehicles, in particular for electric busses or the like, for forming an electrically conductive connection between a vehicle and a stationary charging station, the positioning unit (10) being configured to be disposed on a vehicle roof, a contact device (11) of the positioning unit (10) being moveable relative to a charging contact device of the charging station and being electrically connectable to said charging contact device in a contact position, the positioning unit (10) having an articulated arm device (12) for positioning the contact device (11) and a drive device (17) for driving the articulated arm device (12), the articulated arm device (12) having a first pivot mechanism (13) having a first pivot arm (14), the articulated arm device (12) having a second pivot mechanism (15) having a second pivot arm (16) by means of which the contact device (11) is pivotable from a retracted position of the positioning unit (10) to the contact position and vice versa, the first pivot arm (14) being disposed so as to be pivotable on a distal end (21) of the second pivot arm (16), the contact device (11) being pivotable independently of a position of the second pivot arm (16), the contact device (11) being pivotable from a storing state of the retracted position for storing the contact device (11) to a vertical contact state of the retracted position by means of the first pivot mechanism (13) and vice versa,
**characterized in that**
the second pivot arm (16) is formed so as to be cranked, a section (40) of the second pivot arm (16) forming the distal end (21) being horizontally positioned in the storing state, the first pivot arm (14) having the contact device (11) being pivoted towards a proximal end of the second pivot arm (16) and resting on the section (40) in the storing state, the contact device (11) initially being pivotable from the storing state to the vertical contact state and subsequently from the vertical contact state to the contact position and vice versa.

2. The positioning unit according to claim 1,
**characterized in that**
the positioning unit (10) comprises a holding frame (18) for mounting the positioning unit (10) on a roof of a vehicle, the second pivot arm (16) being disposed so as to be pivotable on the holding frame (18).

3. The positioning unit according to claim 1 or 2,
**characterized in that**
by means of the articulated arm device (12), the contact device (11) is vertically and horizontally positionable relative to the charging contact device and moveable to the contact position.

4. The positioning unit according to any one of the preceding claims, **characterized in that**
the drive device (17) has a first adjustment drive (31) for generating an adjustment force which acts on the first pivot arm (14) and for forming a first spring member which mechanically interacts with the first adjustment drive.

5. The positioning unit according to claim 4,
**characterized in that**
the first spring member comprises at least one torsion spring (32) which is disposed on a pivot axis (22) connecting the first pivot arm (14) and the second pivot arm (16).

6. The positioning unit according to claim 4,
**characterized in that**
the first adjustment drive (31) has an electric motor, a rope drive and/or a chain drive via which the first pivot arm (11) is rotatable on the pivot axis (22).

7. The positioning unit according to any one of the preceding claims,
**characterized in that**
the drive device (17) has a second adjustment drive (33) for generating an adjustment force which acts on the second pivot arm (16) and for forming a second spring member which mechanically interacts with the second adjustment drive.

8. The positioning unit according to claim 7,
**characterized in that**
the second spring member comprises at least one contact spring, the second adjustment drive (33) and the contact spring being mechanically coupled to each other in series in such a manner that the second adjustment drive and the contact spring are configured to generate a contact force on a contact surface.

9. The positioning unit according to any one of the preceding claims,
**characterized in that**
the contact device (11) is positionable between a lower contact position and an upper contact position using the articulated arm device (12), a ratio of the structural height (B) of the positioning unit (11) in the storing state to the height (Ko) of the upper contact position being 1 : 4,
preferably 1 : 6.5, a ratio of the structural height (B) to the height (Ku) of the lower contact position being 1 : 4, preferably 1 : 3.

10. The positioning unit according to any one of the preceding claims,
**characterized in that**
the contact device (11) has a contact element carrier (26) having contact elements (27), the contact elements (27) each being electrically connectable to charging contact elements of the charging contact device in the contact position for forming contact pairs.

11. The positioning unit according to any one of the preceding claims,
**characterized in that**
the first pivot mechanism (13) has a transverse guide (24) by means of which the contact device (11) is transversely positionable relative to the charging contact device, the transverse guide being disposed on a distal end (23) of the first pivot arm (14).

12. A fast charging system having a charging contact device and a positioning unit (10) according to any one of the claims 1 to 11.

13. A method for forming an electrically conductive connection between an electrically driven vehicle, in particular an electric bus or the like, and a stationary charging station having a positioning unit (10), a contact device (11) of the positioning unit (10) being moved relative to a charging contact device of the charging station and being electrically connected to said charging contact device in a contact position, the contact device (11) being positioned by means of an articulated arm device (12) of the positioning unit (10) and the articulated arm device (12) being driven by means of a drive device (17) of the positioning unit (10), , the contact device (11) being pivoted from a retracted position of the positioning unit (10) to the contact position by means of a second pivot mechanism (15) of the articulated arm device (12) having a second pivot arm (16), a first pivot arm (14) of a first pivot mechanism (13) of the articulated arm device (12) being disposed on a distal end (21) of the second pivot arm and pivoted, the contact device (11) being pivoted independently of a state of the second pivot arm (16), the contact device (11) being pivoted from a storing state of the retracted position for storing the contact device (11) to a vertical contact state of the retracted position by means of the first pivot mechanism (13),
**characterized in that**
the second pivot arm (16) is formed so as to be cranked, a section (40) of the second pivot arm (16) forming the distal end (21) being horizontally positioned in the storing state, the first pivot arm (14) having the contact device (11) being pivoted towards a proximal end of the second pivot arm (16) and resting on the section (40) in the storing state, the contact device (11) initially being pivotable from the storing state to the vertical contact state and subsequently from the vertical contact state to the contact position and vice versa.

14. The method according to claim 13,
**characterized in that**
during a pivoting of the contact device (11) using the second pivot arm (16), the first pivot mechanism (13) always positions the contact device (11) in the vertical contact state.

## Revendications

1. Unité de positionnement (10) destinée à des véhicules à propulsion électrique, en particulier à des bus électriques ou similaires, et destinée à établir une connexion électriquement conductrice entre un véhicule et une station de charge stationnaire, l'unité de positionnement (10) étant conçue pour être disposée sur le toit d'un véhicule, un dispositif de contact (11) de l'unité de positionnement (10) étant mobile par rapport à un dispositif de contact de charge de la station de charge et pouvant être connecté électriquement audit dispositif de contact de charge dans une position de contact, l'unité de positionnement (10) ayant un dispositif de bras articulé (12) pour positionner le dispositif de contact (11) et un dispositif d'entraînement (17) pour entraîner le dispositif de bras articulé (12), le dispositif de bras articulé (12) ayant un premier mécanisme pivotant (13) ayant un premier bras pivotant (14), le dispositif de bras articulé (12) ayant un deuxième mécanisme pivotant (15) ayant un deuxième bras pivotant (16) au moyen duquel le dispositif de contact (11) peut être pivoté d'une position rétractée de l'unité de positionnement (10) vers la position de contact et vice versa, le premier bras pivotant (14) étant disposé de manière à pouvoir pivoter sur une extrémité distale (21) du deuxième bras pivotant (16), le dispositif de contact (11) pouvant être pivoté indépendamment d'un état du deuxième bras pivotant (16), le dispositif de contact (11) pouvant être pivoté d'un état de stockage de la position rétractée, destiné à stocker le dispositif de contact (11), vers un état de contact vertical de la position rétractée au moyen du premier mécanisme pivotant (13) et vice versa,
**caractérisé en ce que**
le deuxième bras pivotant (16) est formé de manière à être coudé, une partie (40) du deuxième bras pivotant (16) formant l'extrémité distale (21) étant positionnée horizontalement dans l'état de stockage, le premier bras pivotant (14) ayant le dispositif de contact (11) étant pivoté vers une extrémité proximale du deuxième bras pivotant (16) et reposant sur ladite partie (40) dans l'état de stockage, le dispositif de contact (11) étant initialement pivoté de l'état de stockage vers l'état de contact vertical, puis de l'état de contact vertical vers la position de contact, et inversement.

2. Unité de positionnement selon la revendication 1,
**caractérisée en ce que**
l'unité de positionnement (10) comprend un cadre de support (18) destiné à fixer l'unité de positionnement (10) sur le toit d'un véhicule, le deuxième bras pivotant (16) étant disposé de manière à pouvoir être pivoté sur le cadre de support (18).

3. Unité de positionnement selon la revendication 1 ou la revendication 2,
**caractérisée en ce**
**qu'**au moyen du dispositif de bras articulé (12), le dispositif de contact (11) est positionnable verticalement et horizontalement par rapport au dispositif de contact de charge et peut être déplacé vers la position de contact.

4. Unité de positionnement selon l'une quelconque des revendications précédentes,
**caractérisée en ce que**
le dispositif d'entraînement (17) a un premier entraînement d'ajustement (31) destiné à générer une force d'ajustement qui agit sur le premier bras pivotant (14) et destiné à former un premier élément de ressort qui interagit mécaniquement avec le premier entraînement d'ajustement.

5. Unité de positionnement selon la revendication 4,
**caractérisée en ce que**
le premier élément de ressort comprend au moins un ressort de torsion (32) qui est disposé sur un axe de pivotement (22) reliant le premier bras pivotant (14) et le deuxième bras pivotant (16).

6. Unité de positionnement selon la revendication 4,
**caractérisée en ce que**
le premier entraînement d'ajustement (31) a un moteur électrique, une transmission par câble et/ou un entraînement par chaîne par l'intermédiaire desquels le premier bras pivotant (11) peut tourner autour de l'axe de pivotement (22).

7. Unité de positionnement selon l'une quelconque des revendications précédentes,
**caractérisée en ce que**
le dispositif d'entraînement (17) a un deuxième entraînement d'ajustement (33) destiné à générer une force d'ajustement qui agit sur le deuxième bras pivotant (16) et destiné à former un deuxième élément de ressort qui interagit mécaniquement avec le deuxième entraînement d'ajustement.

8. Unité de positionnement selon la revendication 7,
**caractérisée en ce que**
le deuxième élément de ressort comprend au moins un ressort de connexion, le deuxième entraînement d'ajustement (33) et le ressort de connexion étant couplés mécaniquement l'un à l'autre en série de telle manière que le deuxième entraînement d'ajustement et le ressort de connexion sont configurés pour générer une force de contact sur une surface de contact.

9. Unité de positionnement selon l'une quelconque des revendications précédentes,
**caractérisée en ce que**
le dispositif de contact (11) est positionnable entre une position de contact inférieure et une position de contact supérieure à l'aide du dispositif de bras articulé (12), le rapport entre la hauteur de construction (B) de l'unité de positionnement (11) à l'état de stockage et la hauteur (Ko) de la position de contact supérieure étant de 1 : 4, de préférence de 1 : 6,5, le rapport entre la hauteur de construction (B) et la hauteur (Ku) de la position de contact inférieure étant de 1 : 4, de préférence de 1 : 3.

10. Unité de positionnement selon l'une quelconque des revendications précédentes,
**caractérisée en ce que**
le dispositif de contact (11) a un support (26) ayant des éléments de contact (27), les éléments de contact (27) chacun pouvant être connectés électriquement à des éléments de contact de charge du dispositif de contact de charge dans la position de contact pour former un appariement de contacts.

11. Unité de positionnement selon l'une quelconque des revendications précédentes,
**caractérisée en ce que**
le premier bras pivotant (13) a un guide transversal (24) au moyen duquel le dispositif de contact (11) peut être positionné transversalement par rapport au dispositif de contact de charge, le guide transversal (24) étant disposé sur une extrémité distale (23) du premier bras pivotant (14).

12. Système de chargement rapide ayant un dispositif de contact de charge et une unité de positionnement (10) selon l'une quelconque des revendications 1 à 11.

13. Procédé pour établir une connexion électriquement conductrice entre un véhicule à propulsion électrique, en particulier un bus électrique ou similaire, et une station de charge stationnaire ayant une unité de positionnement (10), un dispositif de contact (11) de l'unité de positionnement (10) étant déplacé par rapport à un dispositif de contact de charge de la station de charge et étant connecté électriquement audit dispositif de contact de charge dans une position de contact, le dispositif de contact (11) étant positionné au moyen d'un dispositif de bras articulé (12) de l'unité de positionnement (10) et le dispositif de bras articulé (12) étant entraîné au moyen d'un dispositif d'entraînement (17) de l'unité de positionnement (10), le dispositif de contact (11) étant pivoté d'une position rétractée de l'unité de positionnement (10) vers la position de contact au moyen d'un deuxième mécanisme pivotant (15) du dispositif de bras articulé (12) ayant un deuxième bras pivotant (16), un premier bras pivotant (14) d'un premier mécanisme pivotant (13) du dispositif de bras articulé (12) étant disposé sur une extrémité distale (21) du deuxième bras pivotant et pivotant, le dispositif de contact (11) étant pivoté indépendamment de l'état du deuxième bras pivotant (16), le dispositif de contact (11) étant pivoté d'un état de stockage de la position rétractée pour stocker le dispositif de contact (11) vers un état de contact vertical de la position rétractée au moyen du premier mécanisme pivotant (13),
**caractérisée en ce que**
le deuxième bras pivotant (16) est formé de manière à être coudé, une partie (40) du deuxième bras pivotant (16) formant l'extrémité distale (21) étant positionnée horizontalement dans l'état de stockage, le premier bras pivotant (14) ayant le dispositif de contact (11) étant pivoté vers une extrémité proximale du deuxième bras pivotant (16) et reposant sur ladite partie (40) dans l'état de stockage, le dispositif de contact (11) étant initialement pivoté de l'état de stockage vers l'état de contact vertical, puis de l'état de contact vertical vers la position de contact, et inversement.

14. Procédé selon la revendication 13,
**caractérisé en ce que**
lors d'un pivotement du dispositif de contact (11) à l'aide du deuxième bras pivotant (16), le premier mécanisme pivotant (13) positionne toujours le dispositif de contact (11) dans l'état de contact vertical.
